# EUROPEAN PATENT SPECIFICATION

(11) **EP 3 805 460 B1**
(45) Date of publication and mention of the grant of the patent: **16.08.2023**
(21) Application number: 20200383.6
(22) Date of filing: 06.10.2020
(51) Int. Cl.: E01F 13/02

(54) **AN EMERGENCY RELEASE BARRIER SYSTEM**
NOTENTRIEGELUNGSBARRIERESYSTEM
SYSTÈME DE BARRIÈRE DE LIBÉRATION D'URGENCE

(30) Priority: 07.10.2019 GB 201914447
(43) Date of publication of application: 14.04.2021
(73) Proprietor: Tensator Group Limited, Milton Keynes MK14 6TS (GB)
(72) Inventor: CRAWLEY, Peter James, Milton Keynes MK14 6TS (GB); SULLY, Benjamin James, Milton Keynes MK14 6TS (GB)
(74) Representative: Serjeants LLP

(56) References cited:
- EP-A2- 1 153 559
- WO-A1-2015/161328
- GB-A- 2 260 550
- US-A1- 2004 178 400

## Description

### Field of Invention

The present invention relates to temporary barrier systems, as are typically found in airports and other similar locations. In particular, the invention relates to barrier systems comprising movable posts having extendable tapes that can be extended from one post and then held in position in a retaining means formed on an adjacent post.

### Background

Temporary barrier systems are in widespread use throughout the world in any location where temporary queueing systems are required. For example, temporary barrier systems as known from WO2015/161328A and GB2260550A are commonly used at airports, train stations, cinemas, and other similar locations.

Tape and post barrier systems are the most common form of temporary barrier systems. Such systems comprise a plurality of movable vertical posts that are weighted at a lower end such that they cannot be easily toppled over. An extendable tape with an attaching part at an outer end is provided at the upper end of each post. The upper end of each post will have one or more retainers for retaining an attaching part of an outer end of an extendable tape from an adjacent barrier. By extending an extendable tape from a first post and retaining the attaching part at the end of said extendable tape in a retainer of a second post a temporary barrier can be formed. Several posts can be used to form barriers of greater length.

In order to open a temporary barrier system according to the prior art it is necessary to remove the attaching part of an extendable tape from the retainer of the post to which it is mounted. Generally, retainers are formed such that the attaching parts can be mounted therein by vertically sliding the attaching part in or out of the retainer. The attaching part will be retained against movement in any other direction. In particular, horizontal forces will not act to pull an attaching part out of a retainer. This is to avoid the barrier being inadvertently opened by a person pulling on the extendable tape. There is an issue with existing temporary barrier systems in that they do not open easily in an emergency situation. In particular, in an emergency situation a person may wish to exit through the barrier system and may attempt to do this by pulling on the extendable tape or by attempting to walk/run through the extendable tape. In existing temporary barrier systems pulling on the tape or attempting to walk/run through the extendable tape will not remove the attaching part of the extendable tape from the retainer of a post, instead the force will first act to extend the extendable tape to its limit and will then act to topple over one or both posts to which the extendable tape is attached. This is clearly undesirable.

Importantly, when a person acts to attempt to walk/run through an extendable tape they will act to extend the tape in a direction away from the direction in which it previously extended between the relevant posts. In a normal situation an extendable tape will extend outwards from each post in a horizontal direction that is substantially coincident with a radial direction of each post. When a person attempts to walk/run through the tape it will be extended in a horizontal direction away from said radial directions. As a result, the horizontal forces on an extendable tape in this situation will consist of a first component that acts in a first direction that is substantially coincident with a radial direction of the posts and a second component that acts in a second direction that is perpendicular to the first direction. Neither the first component nor the second component will act to disengage the attaching part of an extendable tape from a retainer of a post as a vertical movement is required to move the attaching part of an extendable tape out of engagement with a retainer.

In light of the above, there is a need for an improved emergency barrier system that reduces the likelihood of posts being toppled over in an emergency situation.

### Summary of Invention

The present invention provides an emergency release barrier system comprising:
a post having at least one retainer; and
a barrier tape having a cooperatively shaped attaching part formed at an outer end of the tape; wherein:
   the retainer is open at an upper end, has a first vertical retaining wall at a first side, a second vertical retaining wall at a second side, and a vertically extending opening formed between the first retaining wall and the second retaining wall, such that a vertically extending retaining volume is formed between an inner wall of the retainer, the first retaining wall and the second retaining wall, and a maximum width of the retaining volume is greater than a width of the opening; and
   the attaching part of the barrier tape is cooperatively formed to be removably mounted in and retained in the retaining volume of the retainer; characterised in that:
      an outer end of the attaching part is formed of a first flexible wing at a first side and a second flexible wing at a second side, the first and second flexible wings being compressible in a direction towards one another;
      the attaching part is formed such that when the attaching part is located within the retaining volume the first flexible wing engages with the first retaining wall and the second flexible wing engages with the second retaining wall; wherein,
      the first and the second retaining walls are substantially straight and angled towards one another; and
      the first and second flexible wings can be compressed towards one another by pulling the barrier tape outwards to remove the attaching part from the retainer such that a maximum width of the attaching part is less than the width of the opening.

The barrier tape of the present invention may be an extendable tape that extends from the top portion of a second post or from any other suitable housing or apparatus.

In many embodiments the post of the present invention will be substantially cylindrical but it may be of any other suitable shape. For ease of description, the post will be discussed as having a radial direction, that being an outwards direction that is coincident with a radius of a cylindrical post. It is to be understood that the term radial direction does not limit the system of the present invention to substantially cylindrical posts but instead the radial direction of a post is a direction extending horizontally outwards from a central vertical axis of a post, regardless of the shape of said post.

The present invention is advantageous in that it provides a construction of an emergency release barrier system in which, in an emergency situation, the attaching part of the barrier tape can be removed from the retainer of the post simply by pulling the barrier tape with appropriate force in an appropriate direction. In particular, in an emergency situation pulling the barrier tape with sufficient force will act to compress the first flexible wing of the attaching part towards the second flexible wing to reduce the maximum width of the attaching part to be less than the width of the opening. This is achieved as a force pulling outwards on the barrier tape will act to compress the first flexible wing and the second flexible wing of the attaching part together.

By suitably engineering the emergency release barrier system can be ensured that the outwards force required to remove the attaching part from the retainer is less than the outwards force required to topple over the post having the retainer. This can be achieved by controlling the outwards force required to topple over the post and/or the force required to remove the attaching part from the retainer. For example, the outwards force required to topple over the post will depend on the weight of the post and the centre of gravity of the post relative to the position of the retainer, these can be controlled without difficulty. The outwards force required to remove the attaching part from the retainer will depend on the specific geometry of the attaching part and the retainer as well as the flexibility of the first and second flexible wings. Again, the skilled person will be able to control these factors to design an embodiment of the invention with an appropriate force required to remove the attaching part from the retainer. In addition, as is discussed further below, it is possible to engineer an emergency release barrier system according to the present invention such that the outwards force required to remove the attaching part from the retainer varies depending on the angle at which the outwards force is applied. In particular a greater outwards force may be required if said outwards force acts along a radial direction of the post than if said outwards force is not coincident with a radial direction of the post

The retainer of the emergency release barrier system may be integrally formed with the post. Alternatively, the retainer may be removably attached to the post at an inner side. The retainer may be removably attached to the post in any suitable manner, for example it may be bolted to the post and/or may be mounted in a vertical slot formed in the post. A suitable vertical slot may extend from an upper end of the post down to the position at which the retainer is intended to be mounted.

As will be readily appreciated, the retainer and the attaching part of the present invention are formed such that applying an outward force to the barrier tape whilst the attaching part is in the retainer will act to compress the first flexible wing and the second flexible wing together.

The first and second flexible wings and the first and second retaining walls are cooperatively shaped such that an outwards force on the barrier tape is directed to compress the first and second flexible wings towards one another. The first and second retaining walls are substantially straight and are angled towards one another. This is advantageous as angled first and second retaining walls will react to an outwards force on the barrier tape to provide a compressing force on the first and second flexible wings wherein the compressing force has a component that is perpendicular to the outwards force.

The first and second retaining walls are substantially straight and are angled towards one another and may be arranged at any suitable angle. The first and second retaining walls may be angled inwards at substantially the same angle or they may be angled inwards at different angles. The first and second retaining walls may each be angled inwards by any suitable angle in embodiments of the invention the first and second retaining walls are each angled inwards between 10° and 20° from a radial direction of the post that extends through a centre of the retaining volume.

In embodiments of the invention the first flexible wing is formed to be substantially parallel to an inner surface of the first retaining wall when the attaching part is located in the retaining volume and an outer wall of the second flexible wing is formed to be substantially parallel to an inner surface of the second retaining wall when the attaching part is located in the retaining volume. That is, outer surfaces of the first and second flexible wing may be shaped to conform to the inner surfaces of the first and second retaining walls respectively. This may be advantageous as it results in an attaching part that can be securely held in the retainer.

The opening of the retainer of the emergency release barrier system of the present invention may be any suitable size. In embodiments of the invention the width of the opening may be between 10mm and 30mm, for example between 15mm and 20mm.

In order to allow the attaching part to be positioned within the retaining volume in a simple manner, the retaining volume may be open at an upper end and at least partially closed at a lower end. Forming the retaining volume in this manner is advantageous as it allows the attaching part to be slid into and out of the retaining volume from the upper end of the retaining volume when required but still holds the attaching part in position within the retaining against an outwards force. Further, the at least partial closure of the retaining volume at the lower end can act to support the attaching part within the retaining volume against downwards forces.

In embodiments of the invention, the retaining volume and the first and second flexible wings are formed such that an outwards force that does not act along a radial direction of the post is more effective at compressing the first and second flexible wings together than an outwards force that acts directly along a radial direction of the post. This may be achieved by forming the retainer and the first and second flexible wings such that:
an outer end of the first flexible wing is formed to engage with a first corner of the retaining volume that is formed between the first retaining wall and the inner wall of the retainer; and
an outer end of the second flexible wing is formed to engage with a second corner of the retaining volume that is formed between the second retaining wall and the inner wall of the retainer.

In this arrangement, when the barrier tape is pulling the attaching part directly outwards (generally along a radial direction of the post) neither the first flexible wing nor the second flexible wing will engage with a corner of the retaining volume. Instead, the first and second flexible wings will only engage with the first and second retaining walls. As a result, depending on the shape of the outer surfaces of the first and second flexible wings and of the inner surfaces of the first and second retaining walls, the compressive force acting on the first and second flexible wings may not be at an outer end of the first and second flexible wings but may instead be part-way along the first and second flexible wings. As will be readily understood, this will provide a lesser compressive action on the first and second flexible wings than a force that acts at an outer end of the first and/or second flexible wings.

In the same arrangement, when the barrier tape is pulled in a direction that is not directly outwards the attaching part will be pulled within the retaining volume such that an outer end of the first or second flexible wing engages with a first or second corner of the retaining volume. This will act such that the compressive force on the first or second flexible wing acts directly through the outer end of the first or second flexible wing. Thereby a compressive force of the same magnitude will provide a greater compressive action than if it were acting part-way along the first or second flexible wing. In this manner this arrangement results in an emergency release barrier system wherein a smaller outwards force is required to remove the attaching part from the retaining means if the outwards force is not a direct outwards force (generally along a radial direction of the post) but is instead in a direction that is not directly outwards, as might happen when a person is trying to push through the barrier tape in an emergency situation.

As set out above, the emergency release barrier system of the present invention may be engineered such that the force required to pull the attaching means outwards from the retainer is less than the force required to topple over the post. Further, as set out above, the emergency release barrier system of the present invention may be engineered such that a lesser outwards force is required to pull the attaching means out of the retainer when said outwards force is not directly outwards, e.g. does not act directly along a radial direction of the post. On these bases, in embodiments of the invention the system may be engineered such that when a tape attached to the attaching part is pulled outwards from the retainer at an angle greater than 15% away from a radial direction of the post that extends through a centre of the retaining volume, the force required to pull the attaching part out of the retainer is less than the force required to pull over the post. That is, the system may be engineered such that in an emergency situation where a person attempts to escape through the tape the attaching part will be removed from the retainer before the post topples over.

In embodiments of the invention the system may be engineered such that an outward force of 30N or less on the tape in a direction 45° away from a radial direction of the post that extends through a centre of the retaining volume is required to pull the attaching part out of the post. This force is generally less than that required to topple over a post but is more than would be usually applied to the tape during normal, non-emergency, operation of a barrier system.

The first and second flexible wings can be formed of any suitable material that allows them to elastically flex. For example, the first and second flexible wings may be formed of a suitable flexible thermoplastic such as Hytrel^{®} or an equivalent.

In contrast, it is considered to be generally advantageous that the first and second retaining walls do not flex significantly during normal operation of the present invention. As such, it may be preferable that the first and second retaining walls are formed of a relatively inflexible material. In embodiments of the invention the first and second retaining walls are formed of die cast zinc.

Features and advantages of the present invention will be apparent from the preferred embodiment that is shown in the Figures and is described below.

### Drawings

Figure 1 is a schematic of three barrier systems in use;
Figure 2 is a three-dimensional view of an emergency release barrier system according to an embodiment of the present invention;
Figure 3 is a three-dimensional view of the upper end of a post of the system of Figure 2;
Figure 4 is an aerial view of the post of Figure 3;
Figures 5 to 8 are aerial views of the system of Figure 2 in use during an emergency situation.

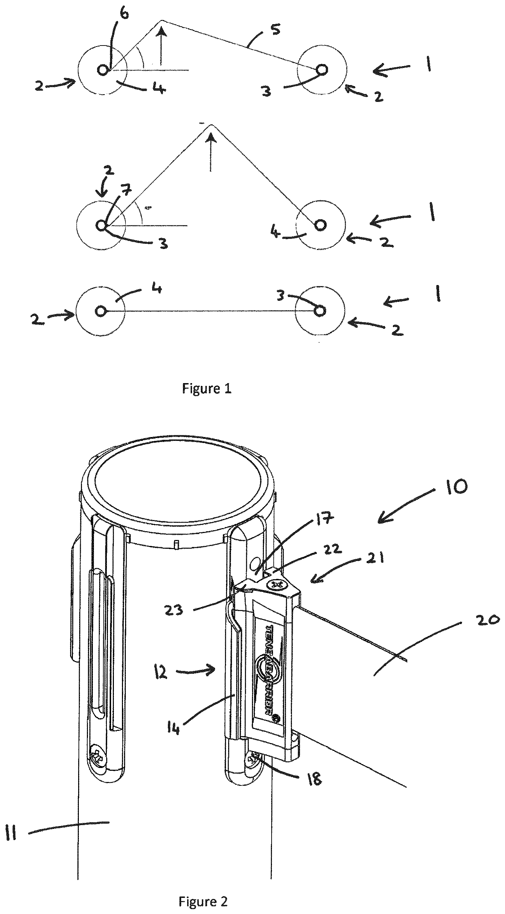

Figure 1 is a schematic of three barrier systems 1 according to the prior art in use. The systems consist of two barrier posts 2, each consisting of a vertically extending post member 3 with a circular weighted base 4. An extendable tape 5 extends from an upper end of a first post member 3 to the upper end of the second post member 3. An attachment part 6 is formed at the outermost end of the extendable tape 5 and is retained in a retainer 7 formed at the upper end of the second post member 3 such that the extendable tape 5 is retained between the post members 3. The barrier posts 2 are approximately 1.0m tall.

In the lowermost barrier system 1 of Figure 1 the extendable tape 5 extends between the barrier posts 2 in a direction coincident with a radial direction of each post member 3. This is the position the extendable tape 5 will be located in during normal operation of the barrier system 1.

The top two barrier systems 1 of Figure 1 the extendable tape 5 has been extended in the same manner as it might be were a person (not shown) to try and push through the extendable tape, for example to exit a queueing system in an emergency. In the uppermost picture the person has tried to push through the extendable tape 5 adjacent the second post member 3, whilst in the second picture the person has tried to push through the extendable tape 5 at a midpoint between the first and second post members 3. In both pictures this has resulted in the extendable tape 5 being further extended and extending outwards from each post member 3 in a direction that is angled away from the radial direction of the post members 3. However, as the movement of the person acts to move the extendable tape 5 in a horizontal direction without a vertical component the extendable tape 5 remains fixed to both barrier posts 2; the extendable tape 5 cannot release. In particular, the attachment part 6 of the extendable tape 5 remains retained in the retainer 7. If the person pushes further the barrier posts 2 will topple over.

An emergency release barrier system 10 according to an embodiment of the present invention is shown in Figures 2 to 8.

The barrier system 10 comprises a post 11 having a retainer 12 formed on an outer surface of the post adjacent an upper end of the post. The retainer 12 is open at an upper end, has a first vertical retaining wall 13 at a first side, a second vertical retaining wall 14 at a second side, and a vertically extending opening 15 formed between the first retaining wall 13 and the second retaining wall 14, such that a vertically extending retaining volume 16 is formed between an inner wall 17 of the retainer 12, the first retaining wall 13 and the second retaining wall 14, and a width of the retaining volume 16 is greater than a width of the opening 15. The retainer 12 has a supporting part 18 formed at a lower end of the retaining volume 16. The post 11 is 1.0m tall and weighs approximately 7.5kg. The post 11 is mounted on a weighted base (not shown).

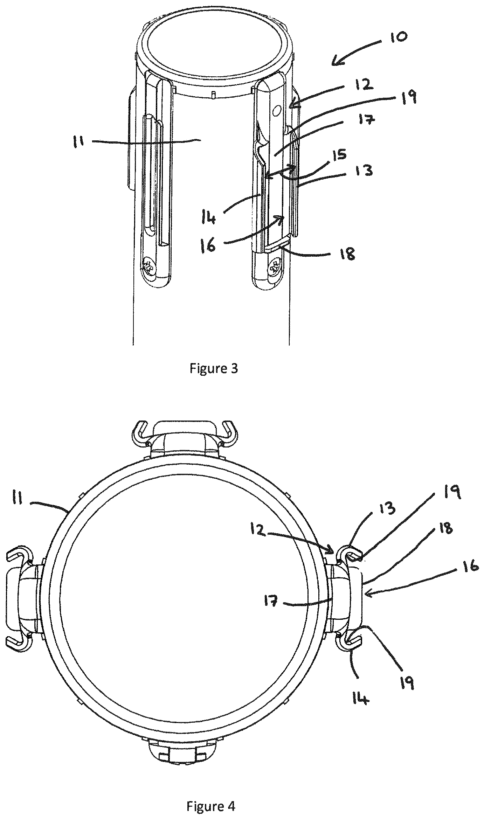

As can be seen best in Figure 4, a horizontal cross-section of the retaining volume 16 is a trapezium in that the first retaining wall 13 and the second retaining wall 14 are both substantially straight and are angled towards one another from the inner wall 17 of the retainer 12. The retaining volume 16 is widest adjacent the inner wall 17 of the retainer and narrowest at the opening 15. The first retaining wall 13 and the second retaining wall 14 are formed of die cast zinc and, as such, are relatively inflexible. The first and second retaining walls 13, 14 are angled towards each other by approximately 16.5°. The width of the opening 15 is 16.5mm and at its widest point, adjacent the inner wall 17 of the retainer, the width of the retaining volume is 18.8mm. That is, the retaining volume 16 narrows by 2.3mm from its innermost point to the opening 15.

The barrier system 10 further comprises an extendable tape 20 that extends from an upper end of a barrier post (not shown). An attaching part 21 is formed at an outer end of the extendable tape 20 and is securely fastened thereto. The attaching part 21 is shaped to cooperate with the retainer 12. In particular, the attaching part 21 has a cooperating trapezoidal shape that allows it to be slid into the retaining volume 16 from an upper end and be retained within the retaining volume 16 by the first and second retaining walls 13, 14, and be supported at a lower end by the supporting part 18 of the retainer 12.

An outer end of the attaching part 21 comprises a first flexible wing 22 at a first side and a second flexible wing 23 at a second side with a gap 24 formed therebetween. The first and second flexible wings 22, 23 can be compressed towards one another. The attaching part 21 is formed of a relatively flexible thermoplastic elastomer such as Hytrel^{®}. A vertical outer surface of the first and second flexible wings 22, 23 is formed to be substantially parallel to an inner surface of the first and second retaining walls 13, 14 respectively. The first and second flexible wings 22, 23 each have an outer vertical edge 25 that, when the attaching part 21 is located within the retainer 12, each engage with a vertical inner corner 19 of the retaining volume 16, wherein the vertical inner corners 19 are formed at an intersection between the first and second retaining walls 13, 14 and the inner wall 17 of the retainer.

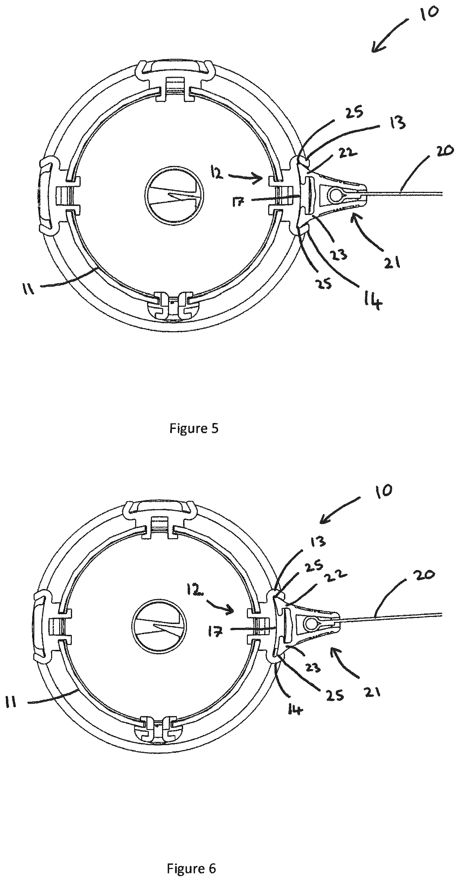

The operation of the emergency release barrier system 10 is shown in Figures 5 to 8. The normal operation of the barrier system 10 is shown in Figure 5 in which the attaching part 21 of the extendable tape 20 is located with the retainer 12 and the extendable tape extends outward from the post 11 in a direction that is substantially parallel to a radial direction of the post. During normal operation, the extendable tape 20 will act to impart an outwards force on the attaching part 21. This force will act to pull an outer wall of each of the first and second flexible wings 22, 23 against an inner wall of the first and second retaining walls 13, 14 respectively and thereby transfer the force on the extendable tape 20 to the retainer 12. There will be no force between the outer vertical edges of the first and second flexible wings 22, 23 and the vertical inner corners 19 of the retaining volume 16. As such, in the orientation of Figure 5 there will be little compressive action on the first and second flexible wings 22, 23 and it is impossible to pull the attaching part 21 outwards from the retainer 12. Instead, pulling the extendable tape 20 outwards would topple over the barrier post 11 before the attaching part 21 releases from the retainer 12.

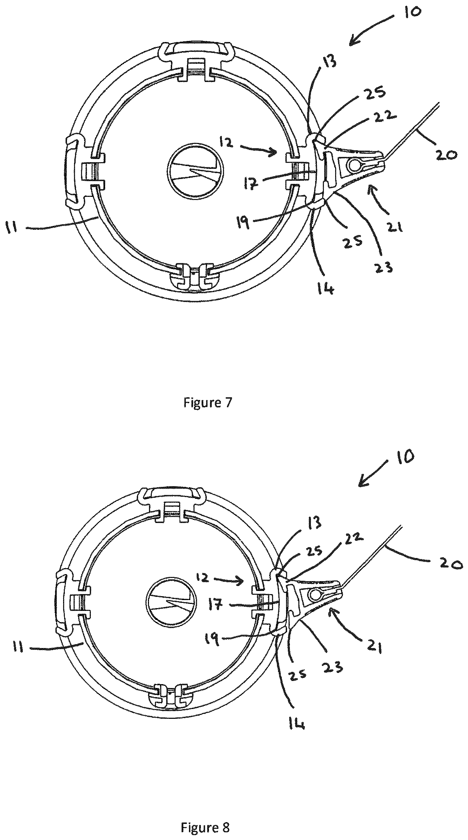

In Figures 6 to 8, the extendable tape 20 is being moved in a horizontal direction away from the radial direction of the post 11. This may occur when a person is pushing against the extendable tape 20 in the manner discussed above in relation to the prior art embodiment of Figure 1. Moving the extendable tape 20 away from the radial direction of the post 11 acts to move the force acting on the attaching part 21. In particular, an outer vertical edge 25 of one of the first or second flexible wings 22, 23 will engage with a vertical inner corner 19 of the retainer 12 and an inward force will thereby act on the first or second flexible wing 22, 23 to compress the attaching part 21. This compression will act to take an outer wall of the other of the first or second flexible wing 22, 23 out of planar contact with the inner surface of the first or second retaining wall 13, 14. Instead, the outer vertical edge 25 of the other of the first or second flexible wing 22, 23 will be brought into contact with said inner surface. This is best shown in Figures 6 and 7. This will also act to compress the first and second flexible wings 22, 23 together. If the first and second flexible wings 22, 23 are compressed together sufficiently the attaching part 21 can be pulled out of the opening 15 of the retainer 12 thereby removing the extendable tape 20 from the post 11. This is shown in Figure 8.

The emergency release barrier system 1 of Figures 2 to 8 is designed such that an outward force of 22N on the extendable tape 20 is sufficient to remove the attaching part 21 from the retainer 12 when said force acts in a direction that is 45° away from the radial direction of the post 11 in which the extendable tape 20 extends in Figure 5. The barrier post 11 has a weighted base (not shown) and a force significantly greater than 22N acting on an upper end of the post is required to topple the post over. In this manner, in an emergency situation a person attempting to escape a queueing system formed by the emergency release barrier system 1 of the embodiment of the invention described herein can do so by simply pushing their way outwards, through the extendable tape 20. Doing this will release an outer end of the extendable tape 20 from the barrier post 11 without toppling a post 11.

## Claims

1. An emergency release barrier system (10) comprising:
a post (11) having at least one retainer (12); and
a barrier tape (20) having a cooperatively shaped attaching part (21) formed at an outer end of the tape; wherein:
the retainer (12) is open at an upper end, has a first vertical retaining wall (13) at a first side, a second vertical retaining wall (14) at a second side, and a vertically extending opening (15) formed between the first retaining wall (13) and the second retaining wall (14), such that a vertically extending retaining volume (16) is formed between an inner wall (17) of the retainer (12), the first retaining wall (13) and the second retaining wall (14), and a maximum
width of the retaining volume (16) is greater than a width of the opening (15); and
the attaching part (21) of the barrier tape (20) is cooperatively formed to be removably mounted in and retained in the retaining volume (16) of the retainer (12); **characterised in that**:
an outer end of the attaching part (21) is formed of a first flexible wing (22) at a first side and a second flexible wing (23) at a second side, the first and second flexible wings (22, 23) being compressible in a direction towards one another;
the attaching part (21) is formed such that when the attaching part (21) is located within the retaining volume (16) the first flexible wing (22) engages with the first retaining wall (13) and the second flexible wing (23) engages with the second retaining wall (14); wherein,
the first and the second retaining walls (13, 14) are substantially straight and angled towards one another; and
the first and second flexible wings (22, 23) can be compressed towards one another by pulling the barrier tape (20) outwards to remove the attaching part from the retainer such that a maximum width of the attaching part (21) is less than the width of the opening (15).

2. An emergency release barrier system (10) according to claim 1, wherein the retainer (12) is removably attached to the post (11) at an inner side

3. An emergency release barrier system (10) according to claim 2, wherein the retainer (12) is mounted in a vertical slot formed in the post (11).

4. An emergency release barrier system (10) according to any preceding claim, wherein the first and second retaining walls (13, 14) are each angled inwards between 10° and 20° from a radial direction of the post (11) that extends through a centre of the retaining volume (16).

5. An emergency release barrier system (10) according to any preceding claim, wherein an outer wall of the first flexible wing (22) is formed to be substantially parallel to an inner surface of the first retaining wall (13) when the attaching part (21) is located in the retaining volume (16) and an outer wall of the second flexible wing (23) is formed to be substantially parallel to an inner surface of the second retaining wall (14) when the attaching part (21) is located in the retaining volume (16).

6. An emergency release barrier system (10) according to any preceding claim, wherein the width of the opening (15) is between 15mm and 20mm.

7. An emergency release barrier system (10) according to any preceding claim, wherein the retaining volume (16) is open at an upper end and at least partially closed at a lower end.

8. An emergency release barrier system (10) according to any preceding claim, wherein:
an outer end (25) of the first flexible wing (22) is formed to engage with a first corner (19) of the retaining volume (16) that is formed between the first retaining wall (13) and the inner wall of the retainer (12); and
an outer end (25) of the second flexible wing (23) is formed to engage with a second corner (19) of the retaining volume (16) that is formed between the second retaining wall (14) and the inner wall of the retainer (12).

9. An emergency release barrier system (10) according to any preceding claim, wherein the first and second flexible wings (22, 23) are formed of flexible thermoplastic.

10. An emergency release barrier system (10) according to any preceding claim, wherein the first and second retaining walls (13, 14) are formed of die cast zinc.

11. An emergency release barrier system (10) according to any preceding claim, wherein the flexibility of the first and second flexible wings (22, 23) is such that, when a tape (20) attached thereto is pulled outwards from the retainer at an angle greater than 15% away from a radial direction of the post (11) that extends through a centre of the retaining volume (16), the force required to pull the attaching part (21) out of the retainer (12) is less than the force required to pull over the post (11).

12. An emergency release barrier system (10) according to any preceding claim, wherein the retainer (12) and the attaching part (21) are formed such that an outward force of 30N or less on the tape (20) in a direction 45° away from a radial direction of the post (11) that extends through a centre of the retaining volume (16) is required to pull the attaching part (21) out of the post (11).

## Patentansprüche

1. Notentriegelungsabsperrsystem (10), umfassend:
einen Pfosten (11), der mindestens eine Halterung (12) aufweist; und
ein Absperrband (20), das einen zusammenwirkend geformten Befestigungsteil (21) aufweist, der an einem äußeren Ende des Bandes gebildet ist; wobei:
die Halterung (12) an einem oberen Ende offen ist, eine erste vertikale Haltewand (13) auf einer ersten Seite, eine zweite vertikale Haltewand (14) auf einer zweiten Seite, und eine sich vertikal erstreckende Öffnung (15) aufweist, die die zwischen der ersten Haltewand (13) und der zweiten Haltewand (14) gebildet ist, sodass ein sich vertikal erstreckendes Haltevolumen (16) zwischen einer Innenwand (17) der Halterung (12), der ersten Haltewand (13) und der zweiten Haltewand (14) gebildet wird, und eine maximale Breite des Haltevolumens (16) größer als eine Breite der Öffnung (15) ist; und
der Befestigungsteil (21) des Absperrbandes (20) zusammenwirkend gebildet ist, um abnehmbar in dem Haltevolumen (16) der Halterung (12) montiert und darin gehalten zu werden; **dadurch gekennzeichnet, dass**:
ein äußeres Ende des Befestigungsteils (21) aus einem ersten flexiblen Flügel (22) auf einer Seite, und einem zweiten flexiblen Flügel (23) auf einer zweiten Seite gebildet ist, wobei der erste und zweite flexible Flügel (22, 23) in einer Richtung zueinander komprimierbar sind;
der Befestigungsteil (21) gebildet ist, sodass, wenn sich der Befestigungsteil (21) innerhalb des Haltevolumens (16) befindet, der erste flexible Flügel (22) in die erste Haltewand (13) eingreift, und der zweite flexible Flügel (23) in die zweite Haltewand (14) eingreift; wobei
die erste und die zweite Haltewand (13,14) im Wesentlichen gerade und zueinander abgewinkelt sind; und
der erste und zweite flexible Flügel (22, 23) zueinander komprimiert werden können, indem das Absperrband (20) nach außen gezogen wird, um den Befestigungsteil aus der Halterung zu entfernen, sodass eine maximale Breite des Befestigungsteils (21) geringer als die Breite der Öffnung (15) ist.

2. Notentriegelungsabsperrsystem (10) nach Anspruch 1, wobei die Halterung (12) abnehmbar am Pfosten (11) an einer Innenseite befestigt ist.

3. Notentriegelungsabsperrsystem (10) nach Anspruch 2, wobei die Halterung (12) in einem vertikalen Schlitz montiert ist, der in dem Pfosten (11) gebildet ist.

4. Notentriegelungsabsperrsystem (10) nach einem vorstehenden Anspruch, wobei die erste und zweite Haltewand (13, 14) jeweils zwischen 10° und 20° aus einer radialen Richtung des Pfostens (11), das sich durch eine Mitte des Haltevolumens (16) erstreckt, nach innen abgewinkelt sind.

5. Notentriegelungsabsperrsystem (10) nach einem vorstehenden Anspruch, wobei eine Außenwand des flexiblen Flügels (22) gebildet ist, um im Wesentlichen parallel zu einer Innenfläche der ersten Haltewand (13) zu sein, wenn sich der Befestigungsteil (21) in dem Haltevolumen (16) befindet, und eine Außenwand des zweiten flexiblen Flügels (23) gebildet ist, um im Wesentlichen parallel zu einer Innenfläche der zweiten Haltewand (14) zu sein, wenn sich der Befestigungsteil (21) in dem Haltevolumen (16) befindet.

6. Notentriegelungsabsperrsystem (10) nach einem vorstehenden Anspruch, wobei die Breite der Öffnung (15) zwischen 15mm und 20mm liegt.

7. Notentriegelungsabsperrsystem (10) nach einem vorstehenden Anspruch, wobei das Haltevolumen (16) an einem oberen Ende offen ist, und an einem unteren Ende mindestens teilweise geschlossen ist.

8. Notentriegelungsabsperrsystem (10) nach einem vorstehenden Anspruch, wobei:
ein äußeres Ende (25) des ersten flexiblen Flügels (22) gebildet ist, in eine erste Ecke (19) des Haltevolumens (16) einzugreifen, das zwischen der ersten Haltewand (13) und der Innenwand der Halterung (12) gebildet wird; und
ein äußeres Ende (25) des zweiten flexiblen Flügels (23) gebildet ist, um in eine zweite Ecke (19) des Haltevolumens (16) einzugreifen, das zwischen der zweiten Haltewand (14) und der Innenwand der Halterung (12) gebildet wird.

9. Notentriegelungsabsperrsystem (10) nach einem vorstehenden Anspruch, wobei der erste und zweite flexible Flügel (22, 23) aus einem flexiblen Thermoplastik gebildet werden.

10. Notentriegelungsabsperrsystem (10) nach einem vorstehenden Anspruch, wobei die erste und zweite Haltewand (13, 14) aus Zinkdruckguss gebildet werden.

11. Notentriegelungsabsperrsystem (10) nach einem vorstehenden Anspruch, wobei die Flexibilität des ersten und zweiten flexiblen Flügels (22, 23) derart ist, dass, wenn ein daran befestigtes Band (20) aus der Halterung in einem Winkel nach außen gezogen wird, der mehr als 15% von der radialen Richtung des Pfostens (11) entfernt ist, die sich durch eine Mitte des Haltevolumens (16) erstreckt, die benötigte Kraft zum Ziehen des Befestigungsteils (21) aus der Halterung (12) geringer ist, als die benötigte Kraft zum Ziehen über den Pfosten (11).

12. Notentriegelungsabsperrsystem (10) nach einem vorstehenden Anspruch, wobei die Halterung (12) und der Befestigungsteil (21) gebildet sind, sodass eine Kraft von außen von 30N oder weniger auf das Band (20) in einer Richtung 45° von einer radialen Richtung des Pfostens (11) entfernt, die sich durch eine Mitte des Haltevolumens (16) erstreckt, nötig ist, um den Befestigungsteil (21) aus dem Pfosten (11) zu ziehen.

## Revendications

1. Système de barrière à déclenchement d'urgence (10) comprenant :
un poteau (11) présentant au moins un dispositif de retenue (12) ; et
une bande barrière (20) présentant une pièce de fixation (21) de forme coopérative formée au niveau d'une extrémité extérieure de la bande ; dans lequel :
le dispositif de retenue (12) est ouvert au niveau d'une extrémité supérieure, présente une première paroi de retenue verticale (13) sur un premier côté, une seconde paroi de retenue verticale (14) sur un second côté, et une ouverture s'étendant verticalement (15) formée entre la première paroi de retenue (13) et la seconde paroi de retenue (14), de sorte qu'un volume de retenue (16) s'étendant verticalement est formé entre une paroi intérieure (17) du dispositif de retenue (12), la première paroi de retenue (13) et la seconde paroi de retenue (14), et qu'une largeur maximale du volume de retenue (16) est supérieure à une largeur de l'ouverture (15) ; et
la pièce de fixation (21) de la bande barrière (20) est formée de manière coopérative pour être montée de manière amovible et retenue dans le volume de retenue (16) du dispositif de retenue (12) ; **caractérisé en ce que** :
une extrémité extérieure de la pièce de fixation (21) est formée d'une première aile souple (22) sur un premier côté et d'une seconde aile souple (23) sur un second côté, la première et la seconde aile souple (22, 23) étant compressibles l'une vers l'autre ;
la pièce de fixation (21) est formée de sorte que lorsque la pièce de fixation (21) est située dans le volume de retenue (16), la première aile souple (22) s'engage dans la première paroi de retenue (13) et la seconde aile souple (23) s'engage dans la seconde paroi de retenue (14) ; dans lequel,
la première et la seconde paroi de retenue (13,14) sont sensiblement droites et inclinées l'une par rapport à l'autre ; et
les première et secondes ailes souples (22, 23) peuvent être comprimées l'une vers l'autre en tirant la bande barrière (20) vers l'extérieur pour retirer la pièce de fixation du dispositif de retenue de sorte qu'une largeur maximale de la pièce de fixation (21) soit inférieure à la largeur de l'ouverture (15).

2. Système de barrière à déclenchement d'urgence (10) selon la revendication 1, dans lequel le dispositif de retenue (12) est fixé de manière amovible au poteau (11) au niveau d'un côté intérieur

3. Système de barrière à déclenchement d'urgence (10) selon la revendication 2, dans lequel le dispositif de retenue (12) est monté dans une fente verticale formée dans le poteau (11).

4. Système de barrière à déclenchement d'urgence (10) selon une quelconque revendication précédente, dans lequel les première et seconde parois de retenue (13, 14) sont chacune inclinées vers l'intérieur entre 10° et 20° par rapport à une direction radiale du poteau (11) qui s'étend à travers un centre du volume de retenue (16).

5. Système de barrière à déclenchement d'urgence (10) selon une quelconque revendication précédente, dans lequel une paroi extérieure de la première aile souple (22) est formée pour être sensiblement parallèle à une surface intérieure de la première paroi de retenue (13) lorsque la pièce de fixation (21) est située dans le volume de retenue (16) et une paroi extérieure de la seconde aile souple (23) est formée pour être sensiblement parallèle à une surface intérieure de la seconde paroi de retenue (14) lorsque la pièce de fixation (21) est située dans le volume de retenue (16).

6. Système de barrière à déclenchement d'urgence (10) selon une quelconque revendication précédente, dans lequel la largeur de l'ouverture (15) est comprise entre 15 mm et 20 mm.

7. Système de barrière à déclenchement d'urgence (10) selon une quelconque revendication précédente, dans lequel le volume de retenue (16) est ouvert au niveau d'une extrémité supérieure et au moins partiellement fermé au niveau d'une extrémité inférieure.

8. Système de barrière à déclenchement d'urgence (10) selon une quelconque revendication précédente, dans lequel :
une extrémité extérieure (25) de la première aile souple (22) est formée pour s'engager dans un premier bord (19) du volume de retenue (16) qui est formé entre la première paroi de retenue (13) et la paroi intérieure du dispositif de retenue (12) ; et
une extrémité extérieure (25) de la seconde aile souple (23) est formée pour s'engager dans un second coin (19) du volume de retenue (16) qui est formé entre la seconde paroi de retenue (14) et la paroi intérieure de l'élément de retenue (12).

9. Système de barrière à déclenchement d'urgence (10) selon une quelconque revendication précédente, dans lequel les première et seconde ailes souples (22, 23) sont formées à partir d'un thermoplastique souple.

10. Système de barrière à déclenchement d'urgence (10) selon une quelconque revendication précédente, dans lequel les première et seconde parois de retenue (13, 14) sont formées à partir de zinc moulé sous pression.

11. Système de barrière à déclenchement d'urgence (10) selon une quelconque revendication précédente, dans lequel la flexibilité des première et seconde ailes souples (22, 23) est telle que, lorsqu'une bande (20) qui y est attaché est tiré vers l'extérieur du dispositif de retenue selon un angle supérieur à 15 % par rapport à une direction radiale du poteau (11) qui s'étend à travers un centre du volume de retenue (16), la force nécessaire pour tirer la pièce de fixation (21) hors du dispositif de retenue (12) est inférieure à la force nécessaire pour tirer sur le poteau (11).

12. Système de barrière à déclenchement d'urgence (10) selon une quelconque revendication précédente, dans lequel le dispositif de retenue (12) et la pièce de fixation (21) sont formés de sorte qu'une force extérieure de 30 N ou moins sur la bande (20) dans une direction à 45° d'une direction radiale du poteau (11) qui s'étend à travers un centre du volume de retenue (16) est nécessaire pour tirer la pièce de fixation (21) hors du poteau (11).
